Europäisches Patentamt

(19) European Patent Office

Office européen des brevets

(11) Publication number: **0 071 002**
**B1**

(12) **EUROPEAN PATENT SPECIFICATION**

(45) Date of publication of patent specification: **25.05.88**

(51) Int. Cl.⁴: **G 06 F 12/08**

(21) Application number: **82104820.4**

(22) Date of filing: **02.06.82**

(54) Data processing apparatus including stored value access control to shared storage.

(30) Priority: **27.07.81 US 286909**

(43) Date of publication of application:
**09.02.83 Bulletin 83/06**

(45) Publication of the grant of the patent:
**25.05.88 Bulletin 88/21**

(84) Designated Contracting States:
**DE FR GB**

(56) References cited:
**US-A-4 070 704**
**US-A-4 240 143**

(73) Proprietor: **International Business Machines Corporation**
**Old Orchard Road**
**Armonk, N.Y. 10504 (US)**

(72) Inventor: **Kulakowski, John Edward**
**7541 E.Knollwood Place**
**Tucson, AZ 85715 (US)**
Inventor: **Parsons, Raymond Lonnie**
**3760 N. Tanuri Drive**
**Tucson, AZ 85715 (US)**

(74) Representative: **Grant, Iain Murray**
**IBM United Kingdom Limited Intellectual Property Department Hursley Park**
**Winchester Hampshire SO21 2JN (GB)**

Courier Press, Leamington Spa, England.

## Description

The present invention relates to data processing apparatus having stored value access control to shared storage.

It is common practice for multiple data processors, hosts or central processing units, to share a memory unit and just as common for access to all or a selected part of that unit to be controlled by a storage protection mechanism comprising a stored value associated with the storage which must match a corresponding value produced by a would-be accessing unit. This is basically a privacy mechanism.

The present invention provides data processing apparatus including multiple processing units, each having private storage and sharing common volatile storage as a serially reusable resource, each processor being constrained to gain access to the common volatile storage via a stored value access control mechanism, characterized in that the access control mechanism causes

a) the retention in or for each running processor externally of the volatile storage of the identity of a common location in the volatile storage and of a common multibyte value; and

b) the comparison of the contents of the common location against the common multibyte value, equality granting access, and inequality forcing the testing processor to construct a directory in the volatile storage and thereafter to load the common multibyte value into the common location in the volatile storage

While this arrangement is technically a stored value access control mechanism, its object and function is quite different from a protection mechanism and has nothing to do with privacy.

Many of the memory units such as magnetic tape units and disk file units have retentive characteristics; that is, data is stored in the retentive magnetic coating of the memory element which maintains memory irrespective of whether or not electrical power is being supplied to such memory units. Such retentive memory units generally are characterized by relatively long access times. In the data processing art, it is desired to have memories exhibiting very short access times. Accordingly, the semiconductor type memory, which is a non-retentive or volatile memory, has been employed in connection with storing data for multiple data processing units, hereinafter referred to as hosts. When these volatile memories are shared by a plurality of hosts, particularly loosely coupled hosts, (the operation of the hosts are not entirely dependent upon the contents of the shared memory), access to the shared memory by any of the hosts is through a predetermined sequence of electrically controlled events which provide for tie-breaking of simultaneous access requests as well as the transmission of data between the hosts and the shared volatile memory. Such volatile shared memories, generally require a directory of its contents so that any hosts accessing the memory can inquire into the directory for determining the location of the data it desires to access or find the location for data it desires to store. In a volatile memory such directory is also not retained when the electrical power to the .volatile shared memory is removed.

To begin data processing on a set of hosts, a procedure called initial program load (IPL) is followed for ensuring that the electrical states of the various electrical components of the host, as well as its memories, are properly set for ensuing data processing operations. IPL may include transmission of data from the retentive memories to the volatile memories of the hosts. Such transmissions can include transmission of data from a retentive memory to the above-discussed volatile memory. Before the shared memory can be used, the directory of that shared memory has to be created. Unfortunately, such volatile memories when powered on result in a random and unknown state of the various volatile memory elements, in the semiconductor memory such elements are usually flip-flops. Because of the random and unknown states of all of the memory elements, it is not easily determined whether the shared volatile memory has already been initialized or not. Various hosts can be IPL'ed in an asynchronous or in synchronous relationships with respect to each other. The shared memory may be powered up in synchronization with IPL of the hosts or at some time. Other events such as varying the shared memory offline and online can also result in random and unknown states of the memory elements in this type of memory.

Complex and time consuming communication procedures between the various hosts sharing a given volatile memory can be used to determine whether or not the shared memory is in fact initialized. Further, this complex communication procedure must be maintained to ensure that the memory remains initialized and operable from a data processing view. Any error in such complex communications can result in a loss of data integrity of the data processing system. In particular, if a given host does not respond to such a procedure, in a given time, the initiator of the memory checking procedure cannot be certain whether or not the other hosts is simply exceptionally busy, in a fault condition or whether the communication apparatus is faulty. Accordingly, not only is such a procedure expensive in time and equipment, but is also not completely reliable for ensuring data and system integrities.

It is desired that initialization of a shared volatile memory loosely-coupled in a multi-host environment be readily determined under various operational conditions. Being able to verify memory initialization is important even though one or more hosts are not operative or able to communicate, the shared memory is faulty or, one of the hosts operational but a path to the shared volatile memory is inoperative. Further, simultaneous attempted accesses to the shared memory can occur (tie-breaking is required).

The present invention provides for initializing loosely-coupled volatile shared memories which include a procedure and apparatus for accessing such a memory shared among a plurality of hosts in a loosely-coupled environment. A given storage area of the shared volatile memory is dedicated for memorizing a so-called token. The token has sufficient digital bit positions to ensure against randomness representing the token. Upon an access to the shared volatile memory, the host will read the token area and compare the read token with a known token. If the tokens have a favorable compare, then the memory has been initialized and normal data processing ensues. If the tokens do not have a favorable compare; then the accessing hosts initialize the shared memory by constructing a data directory and other ancillary tables such that the shared volatile memory can be successfully accessed by any of the plurality of hosts. Upon successful completion of this initialization, the initializing host records the token in the token area of the memory such that any subsequent access to the memory by any of the hosts can verify the appropriate initialization of the shared volatile memory. In a practical embodiment of the invention, each of the hosts will have its own main or local memory which it uses in a tightly-coupled relationship. Further, the main or local memories can be accessed by only one of the hosts.

The present invention will be described further by way of example with reference to embodiments of the invention, as illustrated in the accompanying drawings.

In the drawings:

Figure 1 is a block diagram of a multi-host data processing system according to the present invention;

Figure 2 is a flowchart showing the operation of the arrangement of Figure 1;

Figure 3 is a flowchart used to describe accesses to the external memory of the Figure 1;

Figure 4 is a block diagram of an electronic circuit in the external memory as part of another embodiment of the present invention;

Figure 5 is a block diagram of a further embodiment of the invention.

Referring now more particularly to the drawing, like numerals indicate like parts and structural features in the various diagrams. External resource 10, shown as external volatile memory, is accessed by any one of the plurality of hosts 11 via an input/output connection or bus 12. Each of the hosts 11 have their own main memory 13. Each of the main memories 13 further includes a latch 14 for indicating the mode of usage of the shared memory 10. Each use-mode indication in the main memories 13 refer to whether or not the external resource has been appropriately initialized, as later described.

The external memory 10 is accessed by any of the hosts 11 through access circuits 15 which include the usual tie-breaking circuits (not shown) such that simultaneous access is prohibited. External memory 10 can be of the volatile type such that upon each "power on" the contents of the memory are unknown. Such an external memory, in addition to containing data for use by the hosts 11, includes a directory 16 which is an indirect addressing mechanism for accessing the stored host data in external memory 10. A simple mechanism for showing proper initialization of a volatile memory such as a semiconductor memory is to store a token 17 in predetermined addressable storage registers of memory 10. The token is a predetermined data pattern stored in memory of such size as to minimize the probability of indicating a memory as being initialized when it is in fact not initialized. Such a probability is $0.5^N$ where N is the number of bits in the token. If error correction bits are included in the token, the power of N applies also to those error correction bits. When external mmory is of the semiconductor type, a 16 byte (eight bits plus a parity bit per byte) token has been found to be satisfactory for indicating initialization. An example of the token usable in the course of the present invention set forth in hexidecimal is:

F0E1D2C3B4A5968778695A4B3C2D1E0F

A host 11 in initially accessing the external memory will first read the token 17 and then compare it with a token internal to the host. If the tokens compare, then the memory 10 is initialized. If there is a mis-compare, then the memory is uninitialized. It should be noted the memory may be marked uninitialized by a host 11 merely by recording a value in token 17 not equal to the permitted value. Hence, the token provides absolute initialization indications as well as logical initialization indications. An external memory 10 can be indicated as being uninitialized because of an error condition in the token 17 area caused by memory refresh errors, errors caused by access circuit 15 or by bus 12, etc. It is assumed that all detected errors that affect integrity of memory contents are reported to all using hosts.

While external memory 10 can be used in a diverse set of circumstances, this checking scheme can be employed advantageously when external memory 10 is used as a cache for a direct access storage device DASD 20. In this situation, DASD 20 can be accessed directly by the host 11 or via external memory 10. An external data transfer path 24 exists between DASD 20 and external memory 10, such that data can be transferred between DASD 20 and memory 10 independent of host 11 activity. Control of such transfers is so well known that it is not described in this specification. When power is turned on in external memory 10, an IML (initial microcode load) signal is received over line 22, such signal is generated by a power on switch (not shown). At the same time, the on/off mode flip/flop 23 within access circuit 15 is turned to the on mode. Note that the on mode does not indicate that the external memory 10 is initialized, only that power has been turned on. Once the host 11 attempts to access memory 10 via access circuit 15 for reading token 17 will initialization be determined.

Of course, each of the hosts 11 have to be initial program loaded (IPL) as indicated by arrow 21. Once a host 11 is IPL'ed then such host will try to initialize the external memory 10. It should be noted that any host 11 will attempt this initialization; this means, that the use of the token 17 eliminates complex inter-host communications with regard to the initialization of external memory 10.

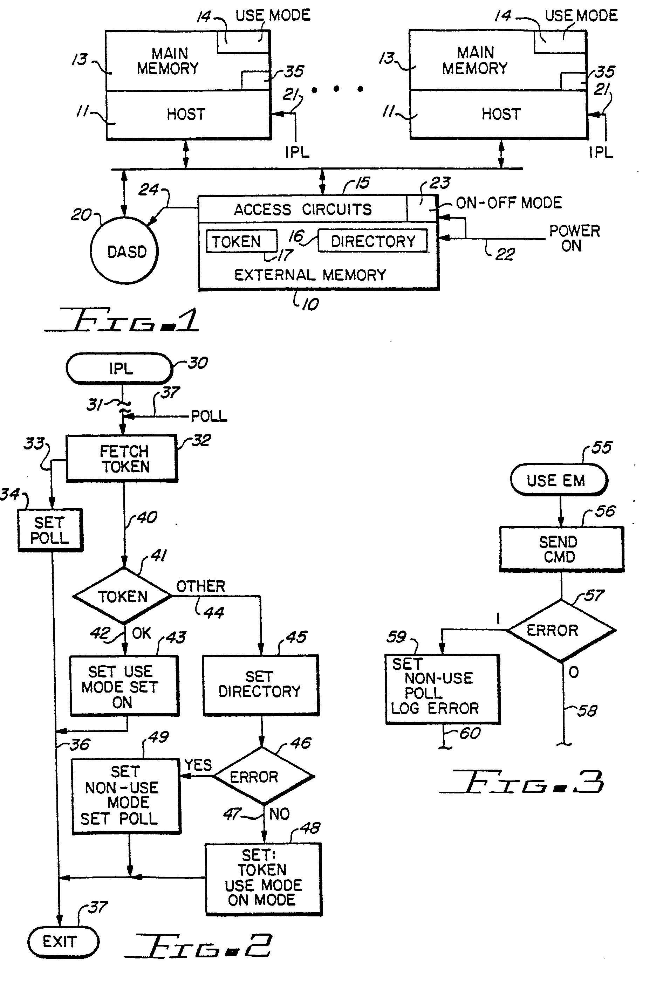

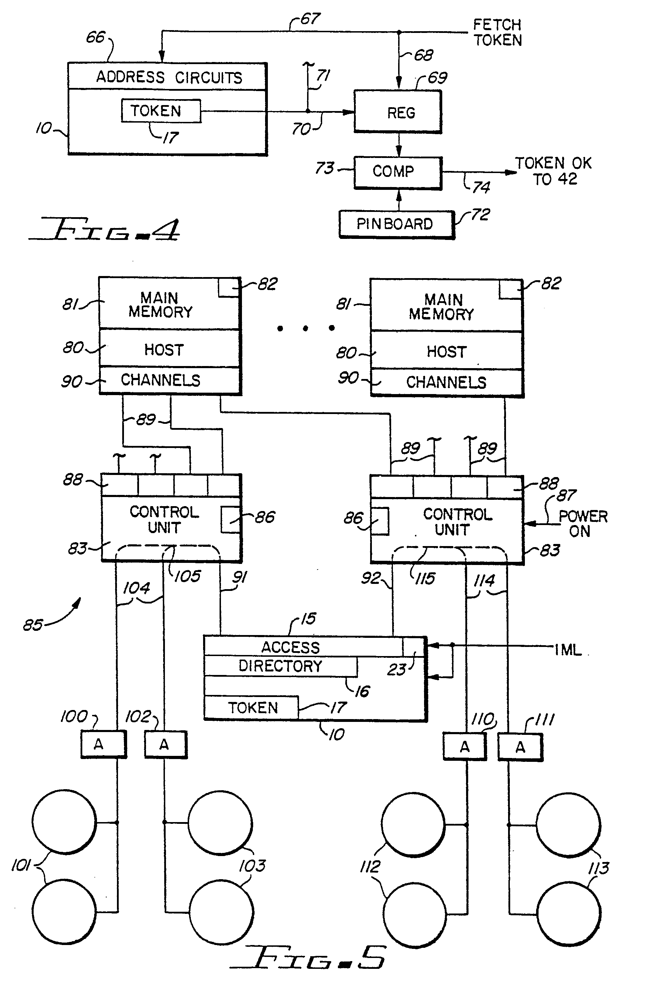

Figure 2 illustrates the logical machine operations of the host 11 during IPL with regard to initialization of external memory 10. IPL is initiated by a bootstrap operation (not shown), indicated at 30. Some non-pertinent logic steps 31 are performed with regard to initialization of host 11 including initialization of its main memory 13. At 32, external memory 10 is accessed for reading token 17. If access circuits 15 are not yet powered on, token 17 cannot be fetched. In that instance, host 11 follows logic path 33 to step 34 for setting poll flag 35 in its main memory 13 indicating to host 11 that external memory 10 should be polled for power-on on a predetermined repetitive basis. When poll 34 sets poll flip-flop 35 of memory 13, host 11 follows logic path 36 to exit the IPL routine at 37. On the other hand, when external memory 10 has been powered on by IML 22, the token 17 is in fact fetched at 32 and transferred to an internal register (not shown) of host 11. Following path 40, the fetched token 17 is compared at 41 with a predetermined token generated for host 11 via IPL 21. If there is a favorable compare of the tokens, then external memory 10 has already been initialized by another host 11. Then following logic path 42, host 11 at 43 sets the use mode latch 14 to the on condition, i.e., external memory 10 is available for use.

If at step 41, the tokens do not compare; then host 11 following logic path 44 will initialize external memory 10. This is achieved by constructing the directory 16 at step 45. Following step 45, error conditions are checked at 46. With no errors, logic path 47 leads host 11 to step 48 whereat the token 17 is set to the value indicated above, use mode flip/flop 14 is set to the use state while flip-flop 23 is again set to the on state. In case there is an error condition, at 49, host 11 sets flip-flop 14 to the non-use mode and sets poll latch 35 such that the status of external memory 10 can be polled on a periodic or predetermined basis. An error message (not shown) can be sent to an operator's console (not shown) for remedial action.

Figure 3 shows a logic of machine operation for using external memory 10. At 55, the use of external memory 10 is indicated. A command is sent over I/O connection 12 at 56. Errors are checked at 57. With no errors, machine operations continue as indicated at 58. For an error condition, relatable to external memory 10, use mode latch 14 is set to non-use state, poll latch 35 is set in the errors log with an error message being sent to the operator via the console. Other machine operations are performed at 60. Upon correction of the error conditions, the poll flip-flop 35 causes host 11 to initiate fetching the token at 32 (Fig. 2) as indicated by arrow 37. In this manner, examination of token 17 can be conducted in a re-entrant manner.

Figure 4 illustrates an electronic circuit within access circuit 15 suitable for performing the step 41 of Figure 2. Other logic steps are still performed in host 11. Memory 10 is addressed via address circuit 66 at an address received over bus 67 which is a portion of input/output connection 12. Contents of token area 17 are supplied over bus 70 to be stored in register 69 as enabled by a signal on line 68 associated with the address on bus 67 for accessing token 17. Numeral 67 and 68 correspond to the fetch token step 32 of Fig. 2. The contents of register 69 are compared by compare circuit 73 with a token set in a pinboard 72. When a favorable compare is sensed, a signal on line 74 is sent to host 11, which corresponds to logic path 42 of Figure 2, indicating the initialization of external memory 10; otherwise host 11 follows logic path 44 for initializing external memory 10.

As seen in Figure 5, a pair of programmed control units 83 can perform the host's functions as described in terms of the arrangements of Figures 1 through 3. In this situation, the programmed control units 85 (separately denominated 83) operate with the external memory 10 and a plurality of DASD 101, 103, 112 and 113. In this instance, a plurality of hosts 80 each have their own main memories 81 which in turn have a mode flip-flop 82 comparable to the host 11, main memory 13 mode latch 14 of Figure 1. Each control unit 85 includes digital processor (not shown) and a memory (not shown) which includes a flip-flop 86 corresponding to use mode flip-flops 14 of Fig. 1. The control units 85 operate with memory 10 in the same manner as described for hosts 11. A plurality of input/output channels 90 connect the hosts 80 to the control units. Each of the control units 85 have a plurality of channel adapters 88 which respectively connect to channels 90 via the input/output connections 89. Each control unit is IMPL'd (initial microprogram loaded) as indicated by arrows 87. Control units are programmed to transfer data signals between DASD 101, 103, 112 and 113 and external memory 10 using known techniques as indicated by dash lines 105 and 115. Electrical connections from control units to the DASDs, indicated by numerals 104 and 114 are through two so-called A boxes 101, 102, 110, and 111, respectively. The A boxes are DASD controllers of known design. External memory 10 is independently electrically connected to the control units 85 via connections 91 and 92. Access circuits 15 include flip-flop 23 and provide for tie-breaking access to external memory 10 by control units 83. Memory 10 includes the directory 16 and token area 17. All operations are identical to Figure 1 except that control units 85 provide the initialization of external memory 10 either independently or upon command from a host 80.

## Claims

1. Data processing apparatus including multiple processing units, (11) each having private storage (13) and sharing common volatile storage (10) as a serially reusable resource, each processor being constrained to gain access to the common volatile storage via a stored value access control mechanism, characterized in that the access control mechanism causes

a) the retention in or for each running processor externally of the volatile storage of the identity of a common location in the volatile storage and of a common multibyte value (17); and

b) the comparison of the contents of the common location against the common multibyte value, equality granting access, and inequality forcing the testing processor to construct a directory (16) in the volatile storage and thereafter to load the common multibyte value into the common location in the volatile storage.

2. Apparatus as claimed in claim 1 wherein the common multibyte value is retained on a pin board (72), the contents of the location being read into an external register 69, a comparator (73) comparing the contents of the register and pin board and signaling, appropriately, equality or non equality.

3. Apparatus as claimed in either preceding claim wherein each processing unit has a power-up control, part of the function of which is to cause the processing unit to attempt to access the common location and, if access is not possible, to set a poll bit (35) to force a further access attempt at a later time.

4. Apparatus as claimed in any preceding claim wherein the said processing units are subsystem controllers (83) in a greater system incorporating host processors (80) whereby the access control mechanism overhead is not a host processor overhead.

5. Apparatus as claimed in claim 4 wherein the subsystem associated with the said processing units is a storage subsystem of which the volatile storage is the directory.

## Patentansprüche

1. Datenverarbeitungsvorrichtung, welche mehrfache Verarbeitungseinheiten (11) enthält, von denen jede einen eigenen Speicher (13) hat und die sich in einen gemeinsamen flüchtigen Speicher (10) als seriell mehrfach aufrufbares Betriebsmittel teilen, wobei jeder Prozessor gezwungen ist, Zugriff auf den gemeinsamen flüchtigen Speicher über einen einen gespeicherten Wert aufweisenden Zugriffsmechanismus zu gewinnen, dadurch gekennzeichnet, daß der Zugriffsmechanismus

a) die Aufbewahrung der Identität eines gemeinsamen Elements in dem flüchtigen Speicher und eines gemeinsamen Multibyte-Werts (17) in oder für jeden laufenden Prozessor außerhalb des flüchtigen Speichers; und

b) den Vergleich des Inhalts des gemeinsamen Elements gegen den gemeinsamen Multibyte-Wert, wobei Gleichheit Zugriff gewährt und Ungleichheit den prüfenden Prozessor zwingt, im flüchtigen Speicher ein Inhaltsverzeichnis (16) aufzubauen und danach den gemeinsamen Multibyte-Wert in das gemeinsame Element in den flüchtigen Speicher zu laden, bewirkt.

2. Vorrichtung nach Anspruch 1, bei welcher der gemeinsame Multibyte-Wert in einem Pinboard (72) aufbewahrt wird, wobei der Inhalt des Elements in ein externes Register (69) eingelesen wird, ein Komparator (73) den Inhalt des Registers und des Pinboard vergleicht und, je nachdem, Gleichheit oder Ungleichheit signalisiert.

3. Vorrichtung nach irgendeinem vorstehenden Anspruch, bei welcher jede Verarbeitungseinheit eine Einschaltsteuerung hat, bei welcher ein Teil von deren Funktion darin besteht zu bewirken, daß die Verarbeitungseinheit auf das gemeinsame Element zuzugreifen versucht und, falls Zugriff nicht möglich ist, ein Abruf-Bit (35) setzt, um einen weiteren Zugriffsversuch zu einer späteren Zeit zu erzwingen.

4. Vorrichtung nach irgendeinem vorstehenden Anspruch, bei welcher die Verarbeitungseinheiten Untersystem-Steuergeräte (83) in einem Host-Prozessoren (80) beinhaltenden größeren System sind, wodurch der Overhead des Zugriffsmechanismus kein Overhead des Host-Prozessors ist.

5. Vorrichtung nach Anspruch 4, bei welcher das den Verarbeitungseinheiten zugeordnete Untersystem ein Speicheruntersystem ist, dessen flüchtiger Speicher das Inhaltsverzeichnis ist.

## Revendications

1. Appareil de traitement de données comportant des unités de traitement (11) multiples dont chacune dispose d'une mémoire privée (13) et partage une mémoire dynamique commune (10) en tant que ressource réutilisable en série, chaque processeur etant contraint à accéder à la mémoire dynamique commune par l'entremise d'un mécanisme de gestion d'accès à valeur mémorisée, caractérisé en ce que le mecanisme de gestion d'accès provoque:

a) la conservation dans ou pour chaque processeur en activité, à l'extérieur de la mémoire dynamique, de l'identité d'un emplacement commun dans la mémoire dynamique et d'une valeur à octets multiples (17) commune; et

b) la comparaison du contenu de l'emplacement commun avec la valeur à octets multiples, commune l'égalité ouvrant l'accès et l'inégalité forçant le processeur candidat à construire un répertoire (16) dans la mémoire dynamique puis à charger la valeur à octets multiples commune à l'emplacement commun dans la mémoire dynamique.

2. Appareil selon la revendication 1, dans lequel la valeur à octets multiples commune est conservée sur un tableau de connexion à broches (72), le contenu de l'emplacement étant transcrit dans un registre externe (69), un comparateur (73) compa-

rant le contenu du registre et du tableau de connexion a broches et signalant de manière appropriée l'égalité ou l'inégalité.

3. Appareil selon l'une quelconque des revendications précédentes dans lequel chaque unité de traitement comporte une commande de mise sous tension dont une partie de la fonction est de faire tenter à l'unité de traitement d'accéder à l'emplacement commun et, si l'accès n'est pas possible, de positionner un bit d'interrogation (35) visant à imposer une nouvelle tentative d'accès à un moment ultérieur.

4. Appareil selon l'une quelconque des revendications précédentes dans lequel lesdites unités de traitement sont des contrôleurs de sous-système (83) faisant partie d'un système plus vaste incorporant des processeurs centraux (80), en permettant ainsi au temps machine du mécanisme de gestion d'accès de n'être pas à la charge des processeurs centraux.

5. Appareil selon la revendication 4, dans lequel le sous-système associé auxdites unités de traitement est un sous-système de mémoire dont la mémoire dynamique est le répertoire.

0 071 002

Fig.1

Fig.2

Fig.3

1

ADDRESS CIRCUITS

TOKEN

REG

COMP

PINBOARD

FETCH TOKEN

TOKEN OK TO 42

*Fig-4*

MAIN MEMORY

HOST

CHANNELS

MAIN MEMORY

HOST

CHANNELS

CONTROL UNIT

CONTROL UNIT

POWER ON

ACCESS

DIRECTORY

TOKEN

IML

A   A   A   A

*Fig-5*